# FASCICULE DE BREVET EUROPEEN

(11) **EP 0 975 941 B1**
(45) Date de publication et mention de la délivrance du brevet: **05.11.2003**
(21) Numéro de dépôt: 98922847.3
(22) Date de dépôt: 16.04.1998
(51) Int. Cl.: G01L 5/28, B64F 1/02

(54) **SYSTEME ET PROCEDE POUR ARRETER UN VEHICULE**
SYSTEM UND VERFAHREN ZUM ANHALTEN EINES FAHRZEUGS
SYSTEM AND METHOD FOR STOPPING A VEHICLE

(30) Priorité: 18.04.1997 FR 9704824
(43) Date de publication de la demande: 02.02.2000
(73) Titulaire: Mourer, Hubert, 75015 Paris (FR)
(72) Inventeur: Mourer, Hubert, 75015 Paris (FR)
(86) Numéro de dépôt international: FR9800770
(87) Numéro de publication internationale: WO98048255

(56) Documents cités:
- EP-A- 0 623 813
- SOVIET PATENTS ABSTRACTS Section PQ, Week 9511 Derwent Publications Ltd., London, GB; Class Q25, AN 95-080436 XP002005130 & RU 2 014 249 C (TALANOV B P) , 15 juin 1994
- SOVIET PATENTS ABSTRACTS Section PQ, Week 9439 Derwent Publications Ltd., London, GB; Class Q25, AN 94-315414 XP002051303 & SU 1 818 279 A (KHUDYAKOV YU I) , 30 mai 1993

## Description

La présente invention concerne un système pour arrêter un véhicule. Elle vise également un procédé mis en oeuvre dans ce système.

En l'état actuel de la technique, il n'existe, hormis les tentatives mentionnées dans RU-C-2 014 249 et SU-A-1 818 279, aucun moyen d'arrêter un véhicule lancé à une certaine vitesse sans lui faire subir ainsi qu'à ses passagers un choc ou une secousse qui sont d'autant plus préjudiciables à ces derniers que la vitesse du véhicule est plus grande.

Le but de la présente invention est de remédier à cet inconvénient en proposant un système qui permette d'arrêter efficacement un véhicule sans choc brutal.

Le système d'arrêt comprend au moins une bande mobile intégrée dans une voie de déplacement du véhicule. Suivant l'invention, la bande est entraînée soit en sens contraire de la direction de déplacement du véhicule à une vitesse au moins égale à celle dudit véhicule ou de ses roues, soit dans le même sens que la direction du véhicule mais à une vitesse supérieure à celui-ci ou à celle de ses roues.

Le système selon l'invention permet ainsi d'arrêter sur une distance très courte tout véhicule. Il suffit de faire tourner la bande d'arrêt au moins à la même vitesse que le véhicule jusqu'à ce que celui-ci ne conserve plus la moindre énergie cinétique. Pour la route, le système selon l'invention peut avantageusement remplacer les ralentisseurs de vitesse et les barrages routiers, en supprimant ainsi les inconvénients et risques induits par les dos d'âne, les chicanes et les barrières. Cela vaut pour tout véhicule: de la bicyclette au char d'assaut, en passant par la moto, la voiture de tourisme, le camion ou le tracteur, dès lors que la bande d'arrêt possède une motorisation suffisante pour l'entraîner à une vitesse au moins égale à celle de ces véhicules. A la vitesse supérieure, la bande d'arrêt fait reculer le véhicule en arrière jusqu'au sol fixe.

Le système selon l'invention trouve application pour tout arrêt impératif sur une voie de circulation, en particulier péages, police, douanes, pistes d'aéroports.

D'autres particularités et avantages de l'invention apparaîtront encore dans la description ci-après. Aux dessins annexés donnés à titre d'exemples non limitatifs:
- La figure 1 représente un premier exemple de réalisation d'un système d'arrêt selon l'invention, dans lequel une bande mobile, formée de plusieurs tapis roulants disposés transversalement à la voie de circulation et en succession continue, est entraînée par une motorisation commune;
- la figure 2 illustre un second exemple de réalisation d'un système d'arrêt selon l'invention, dans lequel chaque tapis roulant est entraîné par une motorisation distincte et ne supporte qu'une roue du véhicule;
- la figure 3 illustre un troisième exemple de réalisation d'un système d'arrêt selon l'invention, comprenant deux bandes mobiles disposées sur chaque passage de roue et vues de haut;
- la figure 4 illustre un premier mode particulier de motorisation du système de deux bandes mobiles parallèles correspondant aux deux passages de roue d'un véhicule;
- la figure 5 illustre un second mode particulier de motorisation du système où il y a un tapis roulant pour chacune des quatre roues d'un véhicule;
- la figure 6 illustre un premier mode de réalisation d'un système d'arrêt selon l'invention mis en oeuvre dans un aéroport où les bandes mobiles sont parallèles à la piste et correspondent aux trains d'atterrissage parallèles d'un avion; ces bandes sont formées chacune soit d'un seul tapis, soit de plusieurs tapis en parallèle non figurés sur le dessin.
- la figure 7 illustre un second mode de réalisation d'un système d'arrêt selon l'invention mis en oeuvre dans un aéroport où les bandes mobiles sont transversales et correspondent aux trains d'atterrissage situés en même ligne transversale d'un avion; ces bandes sont constituées chacune soit d'un seul tapis, soit de plusieurs tapis non figurés sur le dessin.
- la figure 8 illustre un troisième mode de réalisation d'un système d'arrêt selon l'invention mis en oeuvre dans un aéroport où il y a, pour chaque train d'atterrissage, une bande mobile qui peut aussi être formée de plusieurs tapis roulants (non figurés sur le dessin);
- la figure 9 illustre la structure interne d'un exemple particulier de réalisation d'un système d'arrêt selon l'invention où les bandes mobiles sont séparées mais reliées et actionnées par un seul moteur commun, et où le tapis roulant est supporté par des rouleaux tournant eux-mêmes sur des roulements tels que billes, roulettes, mini-rouleaux, tiges;
- la figure 10 représente un exemple de motorisation d'un tapis roulant mis en oeuvre dans un système d'arrêt selon l'invention;
- la figure 11 représente un détail de réalisation d'un système d'arrêt selon l'invention où les rouleaux sont maintenus par les extrémités latérales de leur axe de rotation;
- la figure 12 représente un mode de réalisation d'un dispositif de support des tapis roulants mis en oeuvre dans un système d'arrêt selon l'invention, où les rouleaux intermédiaires entre les grands rouleaux permettent de combler les creux entre ceux-ci.

On va maintenant décrire plusieurs exemples de réalisation d'un système d'arrêt selon l'invention en référence aux figures précitées. Celles-ci n'excluent pas que les proportions des éléments du dispositif par rapport aux roues d'un véhicule puissent être différentes. Par exemple, les rouleaux supportant le tapis roulant peuvent n'avoir que quelques centimètres de diamètre et tourner sur des roulements de diamètre inférieur; le tambour d'entraînement situé sur la voûte peut aussi avoir un faible diamètre, ou un gros diamètre. De sorte que la hauteur d'un dispositif de tapis roulant peut être inférieure à 50 cm ou supérieure à 1 mètre.

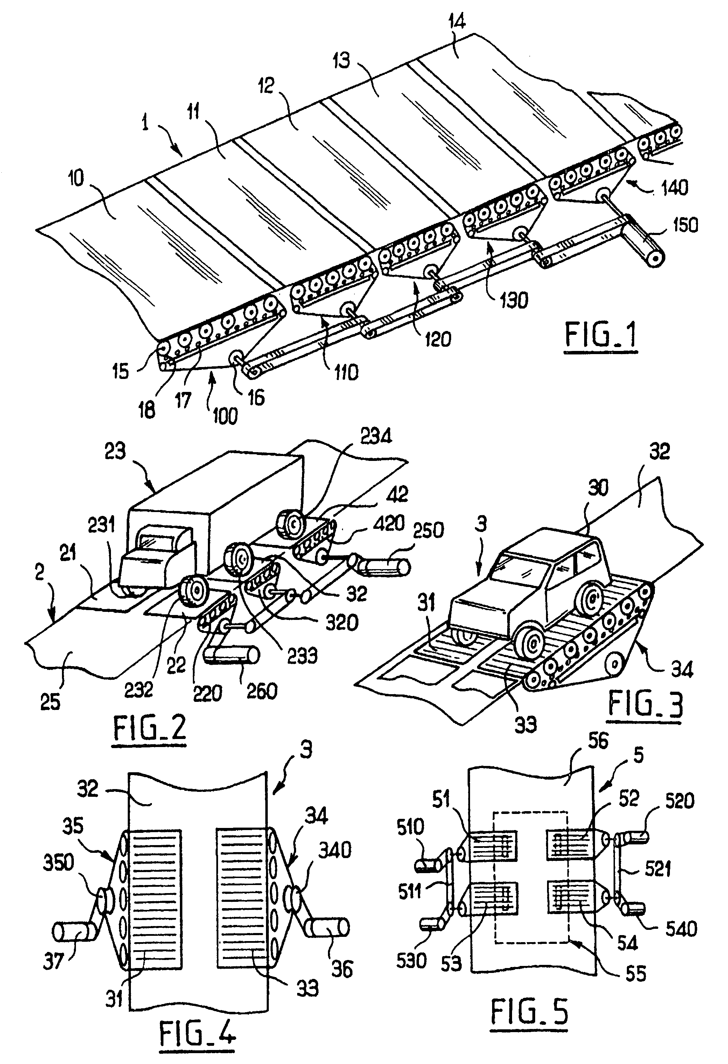

Un système d'arrêt 1 selon l'invention peut comprendre par exemple, en référence à la figure 1, un ensemble de bandes mobiles transversales 10 à 14 entraînées chacune par un mécanisme d'entraînement 100, 110, 120, 130, 140. Chaque mécanisme d'entraînement comprend un ensemble de rouleaux 15 au dessus d'un tapis de billes de support 18 disposées sur une voûte 17. Les bandes mobiles sont chacune entraînées par des tambours d'entraînement 16 eux-mêmes reliés mécaniquement à un moteur d'entraînement unique 150. Ceci constitue un mode particulier de réalisation, une motorisation séparée de chaque bande mobile pouvant aussi être envisagée dans le cadre de la présente invention.

Dans le cas d'une route, on peut prévoir deux bandes d'arrêt parallèles correspondant aux passages de roue empruntés par les véhicules, comme l'illustrent les figures 2 à 5. Chaque bande d'arrêt peut elle-même être constituée de plusieurs tapis roulants disposés successivement selon l'axe de la voie de déplacement, ces différents tapis roulants étant par exemple entraînés en synchronisme.

Ainsi, on peut concevoir un système d'arrêt 2 selon l'invention comprenant pour chaque côté d'une voie 25, un ensemble de tapis roulants 21; 22, 32, 42 prévus pour recevoir chacun une roue d'un véhicule, en référence à la figure 2. Par exemple, dans le cas d'un camion 23 comprenant trois essieux, en situation active du système d'arrêt 2 selon l'invention, chaque roue 231; 232, 233, 234 de ce camion se trouve sur un tapis roulant. Dans cet exemple non limitatif de réalisation, les tapis roulants sont entraînés via des dispositifs d'entraînement 220, 320, 420 au moyen de deux moteurs d'entraînement 250, 260.

On peut également prévoir, pour un système d'arrêt 3 selon l'invention représenté en figures 3 et 4, seulement deux bandes mobiles 31, 33 suffisamment longues pour recevoir les types de véhicule 30 que l'on souhaite arrêter. Ces bandes mobiles 31, 33 sont disposées longitudinalement sur une voie 32 et sont entraînées par des mécanismes d'entraînement 34, 35 pourvus de tambours d'entraînement 340, 350 mus par des moteurs d'entraînement 36, 37.

On peut aussi envisager le cas d'un système d'arrêt 5 comportant par exemple quatre tapis roulants 51, 52, 53, 54, en référence à la figure 5, chaque tapis étant prévu pour recevoir une roue d'un véhicule 55. Dans cet exemple de réalisation, les deux bandes, formées chacune de 2 tapis, 51, 53; 52, 54 d'un même côté sont entraînées par des moteurs 510, 530; 520, 540 synchronisés par une liaison mécanique 511, 521.

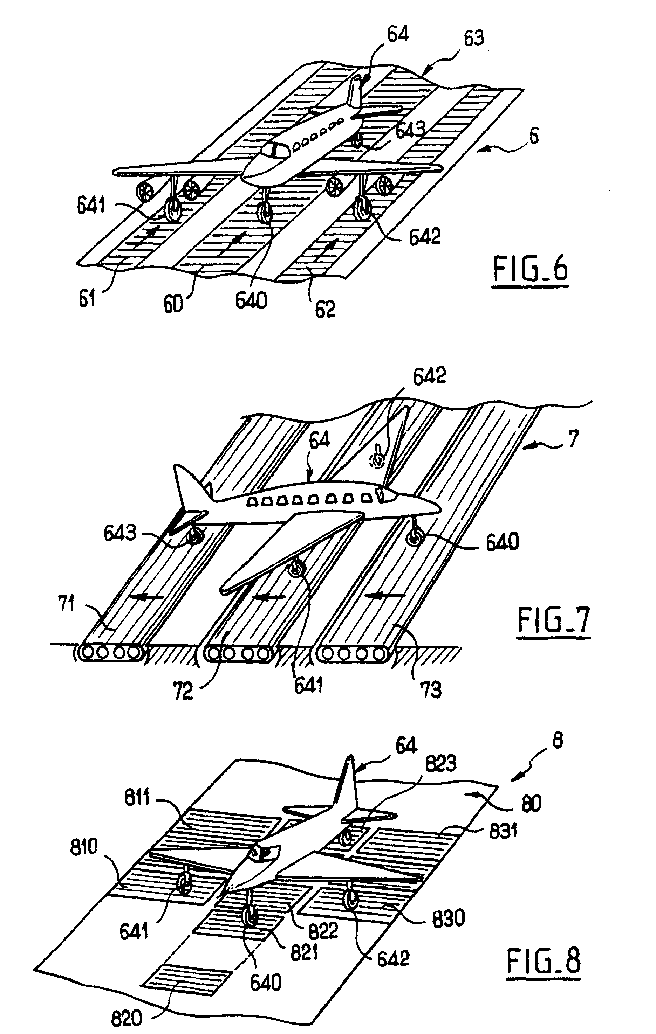

On va maintenant décrire plusieurs exemples de réalisation d'un système d'arrêt selon l'invention conçu pour arrêter des avions, en référence aux figures 6 à 8.

On peut par exemple, en référence à la figure 6, concevoir un système d'arrêt 6 selon l'invention comportant trois bandes mobiles 61, 62, 63 dans l'axe d'une piste 63. Ces trois bandes 61, 62, 63 sont disposées de façon à recevoir les roues 640, 641, 642, 643 des trains d'atterrissage d'un avion 64. Elles peuvent être formées chacune d'un seul tapis roulant ou d'une succession de tapis non figurée sur le dessin.

Mais on peut également prévoir, en référence à la figure 7, un système d'arrêt 7 selon l'invention dans lequel les bandes mobiles 71, 72, 73 sont disposées transversalement à l'axe de la piste et de telle sorte qu'elles puissent recevoir les roues 640, 641, 642, 643 des trains d'atterrissage d'un avion 64. Les bandes sont constituées soit d'un seul tapis, soit de plusieurs non figurés sur le dessin.

Des bandes mobiles 810, 811; 820, 821, 822, 823; 830, 831 peuvent aussi être disposées au sein d'un système d'arrêt 8 équipant une piste 80 de manière à ce que chaque roue 641; 640; 642 du train d'atterrissage d'un avion 64 repose sur une bande d'arrêt distincte de sorte que chaque bande d'arrêt ne supporte que le poids d'une partie seulement de cet avion, toutes les bandes d'arrêt tournant à même vitesse.

Les bandes d'arrêt peuvent être disposées soit transversalement à la direction de la piste en référence à la figure 7, soit parallèlement à sa direction en référence à la figure 6.

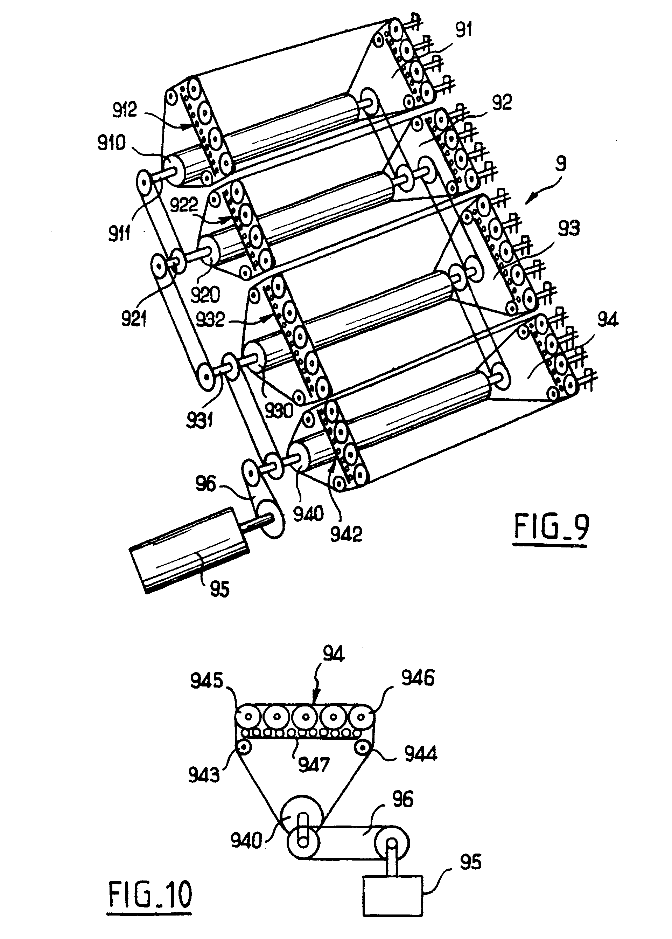

A titre de mode particulier de réalisation, la bande d'arrêt est entraînée par des roues d'extrémités latérales du tambour situé en dessous et sous lequel passe l'enroulement de la bande, comme représenté par les figures 1, 9 et 10. Une bande d'arrêt peut être entraînée par une motorisation propre ou bien être reliée à d'autres bandes d'arrêt en référence aux figures 1 et 10, l'ensemble des bandes reliées étant entraîné par un moteur unique 95, 150. Les bandes d'arrêt peuvent être disposées pour être mues ensemble, ou bien en même temps mais séparément en parcelles distinctes; elles sont alors actionnées chacune par une motorisation distincte ou bien par une motorisation commune dont elles sont à volonté dépendantes ou dissociées.

Dans l'exemple de réalisation d'un système d'arrêt 9 illustré en figure 9, chaque bande mobile 91, 92, 93, 94 est entraînée par un tambour d'entraînement 910, 920, 930, 940 et est supportée par un ensemble de rouleaux de support 912, 922, 932, 942. Les tambours d'entraînement 910, 920, 930, 940 sont mus par un moteur unique 95 à travers des mécanismes de liaison 911, 921, 931, 96.

Dans un mode de réalisation de l'entraînement de la bande mobile 94 représenté en figure 10, la bande mobile entoure des rouleaux d'extrémité 945, 946 des rouleaux latéraux 943, 944 disposés à proximité de la voûte 947 et le tambour d'entraînement 940 mû par le moteur 95 via un dispositif de liaison mécanique 96.

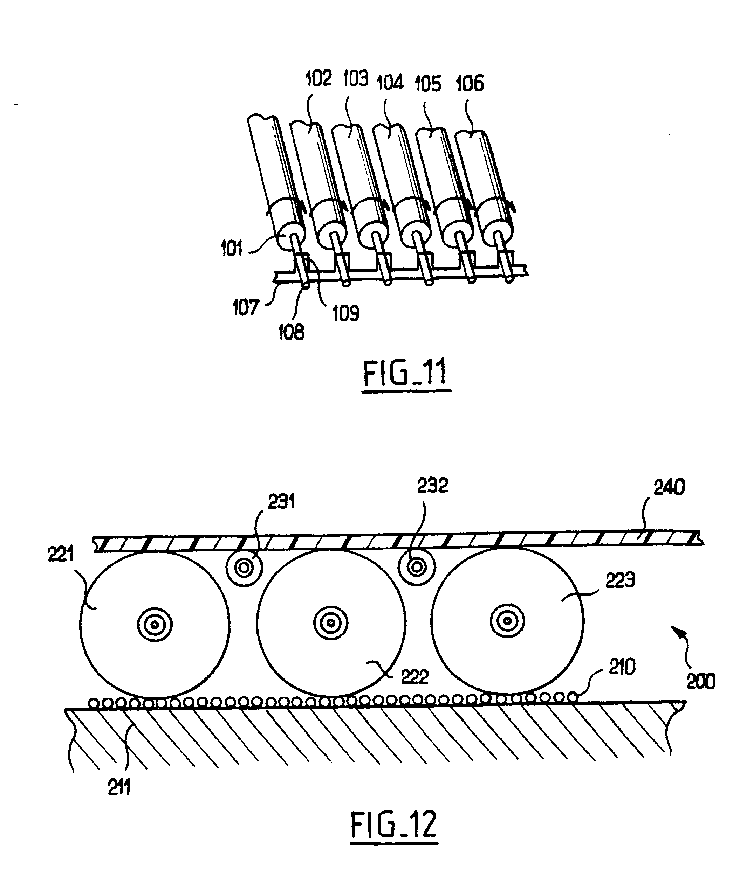

Selon un mode particulier de réalisation de l'entraînement d'une bande mobile, représenté en figure 11, les rouleaux 101 à 106 sont maintenus par les extrémités latérales de leur axe de rotation 108 au moyen de dispositifs de maintien 107.

Comme l'illustre la figure 12, on peut prévoir un aménagement particulier 200 des bandes mobiles permettant de supporter des charges particulièrement lourdes telles qu'un avion. Entre les rouleaux 221 à 223, si leur diamètre conduit à laisser entre leurs demi-circonférences supérieures un espace constituant un creux risquant d'être perceptible aux roues de l'avion, il est monté un autre rouleau 231, 232 de diamètre permettant de combler ce creux sans être en contact avec les surfaces des rouleaux 221, 222, 223 qui l'entourent de manière à tourner librement sur son axe quand il est entraîné pour la circulation du tapis 240 qu'il supporte. Les rouleaux principaux 221, 222 223 sont de préférence disposés au dessus d'un tapis de roulements 210, formés de billes, roulettes, petits rouleaux ou tiges, reposant sur un plateau formant une voûte 211, pont ou plafond du tambour situé en-dessous.

En fait, le dispositif de l'invention est conçu pour faire tourner à grande vitesse une bande mobile apte à supporter le poids d'avions de tonnage élevé.

Comme décrit ci-dessus, le dispositif peut ne former qu'une seule surface de roulage ou bien plusieurs qui sont elles-mêmes juxtaposées en sections de bandes successives, ou parallèles, et ou assez proches pour permettre le passage d'une bande à une autre, ou au contraire éloignées et séparées par des portions de sol fixe. Les tapis roulants peuvent aussi être placés pour que chacun n'ait à supporter qu'un seul train d'atterrissage par avion, ou même seulement une roue d'un train d'atterrissage.

A cette fin, les tapis sont de préférence disposés transversalement à la piste et d'une largeur correspondant à la roue ou au train de roue à supporter.

Il peut être monté un pont-voûte d'enroulement 17, 211, 47 de la bande mobile occupant toute la largeur d'une piste d'aéroport, aussi bien sur 30 m que sur 60 m de large, sans que ni sa solidité, ni l'enroulement de la bande mobile ne soient affectés.

Il sera soutenu dans ce cas par autant de piliers que nécessaire, disposés dans l'intervalle entre deux tapis roulants parallèles, sans que cet intervalle ne dépasse la largeur qui le rendrait perceptible aux roues de l'avion à grande vitesse.

La longueur du pont-voûte transversalement à la piste n'empêcherait pas non plus l'enroulement de la bande sans fin, puisque celle-ci peut être divisée en plusieurs sections qui ne seront séparées que par l'intervalle des jambes de support du pont-voûte. Cet intervalle entre deux sections sera lui-même suffisamment étroit pour qu'aucune roue d'avion ne s'y enfonce en passant d'une section de bande à l'autre.

La longueur du pont-voûte d'un bord à l'autre de la piste, même très large, n'entraîne que la division en sections parallèles de la bande d'enroulement.

Les rouleaux sur lesquels celle-ci glisse peuvent être continus, tout comme les roulements 18 ou 211 sur lesquels ils reposent, d'un bout à l'autre du pont-voûte ; en effet, les piliers du pont-voûte sont en-dessous du plateau 18 ou 211 porteur des rouleaux et de leurs roulements.

De même, le tambour d'entraînement situé sous le pont-voûte, et donc entre ses bords, peut aussi être continu, de la même longueur que le pont-voûte. Le tambour, éventuellement d'un seul tenant, pourra toujours être entraîné par la liaison établie avec le ou les moteurs situés sur ou sous le sol fixe, puisque cette liaison sera montée dans les intervalles inter-tapis et qu'elle n'occupera que quelques centimètres de largeur (courroie, bandes, chaîne ou tige rigide de transmission).

Il apparaît ainsi que le dispositif de l'invention formé du plateau du pont-voûte autour duquel s'enroule le tapis en poussant sous le tambour d'entraînement situé en dessous peut, sur une piste, être d'un seul tenant ou bien constituer autant de tronçons que nécessaire, séparés par du sol fixe ou bien au contraire étroitement juxtaposés parallèlement ou successivement, en évitant que la séparation ne soit perceptible aux roues de l'avion. Eventuellement, et à cette fin, il pourra être installé, entre deux tapis juxtaposés ou parallèles affleurant au niveau du tapis et donc sur lequel roulera directement le pneumatique de l'avion, un dispositif constitué par un ou plusieurs rouleaux, non jointifs et passifs, tournant librement sur eux-mêmes, et dont le diamètre permet de combler l'intervalle de séparation sans le rendre perceptible, et qui est porté par un support particulier inséré entre les deux bandes mobiles.

Le dispositif de l'invention peut être constitué de grandes ou petites unités, fabriquées industriellement en série, de longueur et de largeur variables selon la puissance de motorisation dont on dispose pour faire tourner les tapis. Plus l'unité de tapis roulant est étroite, moins l'effort de rotation sera important.

Selon une variante dite « en série » ou successive, les tambours d'entraînement peuvent être reliés l'un à l'autre ou être actionnés individuellement par un ou plusieurs moteurs du sol fixe.

Selon une variante dite « en parallèle », les tambours d'entraînement de chaque bande peuvent s'emboîter avec le tambour de la bande contiguë, tandis que la courroie de transmission avec le moteur du sol fixe peut passer entre les piliers ou arceaux qui supportent le pont-voûte.

Le dispositif peut donc former un ensemble de plusieurs tronçons ou unités, se présentant comme des parallélépipèdes d'une hauteur qui peut être, si besoin est, inférieure à 50 centimètres, de largeur et de longueur variables, fabriqués industriellement et qu'il suffit de juxtaposer sur place en série ou en parallèle. Ainsi est constitué un système amovible de tapis roulants aptes à être logés dans des emplacements tout préparés et faciles à déplacer, remplacer ou enlever.

Comme évoqué ci-dessus, le dispositif sur lequel glisse la bande sans fin est constitué d'un étage de rouleaux séparés 15, 101 à 106, 221 à 223 et dont les intervalles de séparation sont comblés, si nécessaire, c'est-à-dire au cas où ils seraient perceptibles aux roues de l'avion, par des rouleaux intermédiaires également non jointifs 231, 232 et de diamètre inférieur correspondant à la taille nécessaire pour éviter l'effet de tôle ondulée.

Selon une autre caractéristique de l'invention, l'étage des rouleaux de glissement 15, 101 à 106, 221 à 223 est lui-même supporté par un lit de roulements 18 ou 211, formé de billes, roulettes, petits rouleaux ou tiges, reposant sur la surface du pont-voûte 17, 211, 47 dans des creux ou logements qui les maintiennent à leur place, sans les empêcher de tourner librement sur eux-mêmes.

La fonction de ce lit de roulements est de permettre aux rouleaux qu'il porte d'être entraînés facilement par la circulation du tapis et de tourner rapidement sur eux-mêmes malgré le poids parfois élevé des véhicules y compris avions circulant sur le tapis.

Le lit de roulements peut être aménagé de manière variable, c'est-à-dire en vrac ou compartimenté, ou de manière à encadrer les deux côtés d'un rouleau de grosseur identique ou bien d'employer des roulements de plus grand diamètre sur les deux côtés du rouleau de part et d'autre de son axe longitudinal que sous cet axe, et les roulements sont dans des logements, ou bien maintenus en place par les extrémités de leur axe médian, engagées dans des grilles latérales.

Selon un aménagement particulier, les rouleaux de support du tapis de bande peuvent être montés en étant disposés contigus et jointifs à un roulement, placé entre eux, à leur base ou à mi-hauteur, mais de telle façon qu'en aucun cas, ce roulement intermédiaire ne puisse être touché par la bande mobile circulant sur les rouleaux. Cette disposition permet de communiquer la rotation d'un rouleau à un autre en les faisant tous tourner dans le même sens. Ainsi, la vitesse de rotation des bandes glissant sur les rouleaux n'est pas gênée et l'on économise des roulements quand ceux-ci sont en même temps porteurs des rouleaux qui les encadrent.

Les rouleaux tournant sur eux-mêmes et sur leur lit de roulements sont maintenus en place en ayant l'extrémité de leurs axes engagée dans les cases ou mailles d'une grille fixée au pont-voûte et bordant latéralement la bande sans fin.

Les rouleaux intermédiaires 231, 232 sur support particulier entre deux rouleaux de glissement sont en contact avec la bande sans fin et donc ne sont pas jointifs avec les rouleaux de glissement qui les encadrent, de manière à tourner dans le même sens qu'eux. Ils sont portés par un support quelconque ou par un rehaussement de surface du pont-voûte formant creux, où ils sont logés et maintenus en place sur leur support par les extrémités de leurs axes médians engagées dans une boucle ou une échancrure latérale de leur support.

Le tapis sera de préférence constitué en matériau souple et résistant pour permettre la traction à grande vitesse des roues d'avions parfois lourds. Il peut être utilisé à cette fin des matériaux synthétiques tels que ceux utilisés pour la voilure de bateaux modernes.

Le tapis peut aussi comporter une âme en filet, résille ou treillis métallique, enrobée par un matériau souple.

Le tapis peut aussi être constitué d'un matériau souple comportant dans son épaisseur, où sont enrobées des lattes en matériau semi-rigide avec, éventuellement, des zones de moindre épaisseur pour faciliter le pliage.

Il peut comporter sur sa surface intérieure d'enroulement des stries permettant aux stries correspondantes du tambour d'entraînement de s'y engager pour mieux entraîner le tapis.

Le tapis peut aussi être strié sur sa surface extérieure. Dans ce cas, il passera au dessus du tambour d'entraînement qui comportera des stries correspondantes.

## Revendications

1. Système (1 à 9) pour arrêter un véhicule (23, 30, 64) lancé sur une voie (25, 32, 63), comprenant au moins une bande mobile, formée, d'un ou plusieurs tapis roulants(10-14 ; 21, 22, 32, 42 ; 31, 33, 34, 240), intégrée dans une portion de ladite voie (25, 32, 63), et des moyens (100, 110, 120, 130, 140, 150 ; 220, 320, 420) pour entraîner ladite bande mobile (10 à 14 ; 21, 22, 32, 42; 31, 33, 34), **caractérisé en ce que** l'entrainement s'effectue soit en sens contraire de la direction de déplacement du véhicule (23, 30, 64) à une vitesse au moins égale à celle dudit véhicule (23, 30, 64) ou de ses roues, soit dans le même sens que la direction dudit véhicule mais à une vitesse supérieure à celui-ci ou à celle de ses roues.

2. Système (2 à 8) selon la revendication 1, **caractérisé en ce qu'**il comporte au moins deux ensembles de bandes mobiles (21, 22, 32, 42 ; 31, 33, 34 ; 51 à 54 ; (60 à 62) disposés parallèlement à la direction de déplacement des véhicules.

3. Système (7) selon l'une des revendications 1 ou 2, **caractérisé en ce qu'**il comporte un ensemble de bandes mobiles disposées transversalement par rapport à la direction de déplacement des véhicules.

4. Système selon l'une des revendications 2 ou 3, **caractérisé en ce que** chaque ensemble de bandes mobiles comprend dans le sens de déplacement des véhicules un nombre de bandes mobiles au moins égal au nombre maximal d'essieux des véhicules susceptibles d'être arrêtés par ce système.

5. Système selon l'une quelconque des revendications précédentes, **caractérisé en ce qu'**il se présente sous la forme d'un système amovible pouvant être installé sur toute voie terrestre.

6. Système (1) selon l'une quelconque des revendications précédentes, **caractérisé en ce que** les bandes mobiles (10 à 14) sont toutes entraînées à même vitesse par des moyens d'entraînement communs (150).

7. Système selon l'une quelconque des revendications précédentes, **caractérisé** en ce chaque bande mobile (10) est pourvue d'un dispositif de roulement (100) comprenant un ensemble de rouleaux de support (15) et au moins un tambour d'entraînement (16) autour desquels la bande mobile (10) est enroulée.

8. Système selon la revendication 7, **caractérisé en ce que** les rouleaux de support (221 à 223) reposent sur un lit glissant (18, 210) disposé sur un plan de support (211), et formé de roulements, situés sous les rouleaux ou entre eux.

9. Système selon la revendication 8, **caractérisé en ce que** le lit glissant de roulements (18, 210) est constitué par des billes, roulettes, petits rouleaux ou tiges reposant sur la surface du pont-voûte (17, 211, 47) par l'intermédiaire de logements correspondants aptes à les maintenir en place, sans les empêcher de tourner librement sur eux-mêmes.

10. Système selon l'une des revendications précédentes, **caractérisé en ce que**, entre les rouleaux de support (221 à 223), est monté un autre rouleau intermédiaire (231, 232) de diamètre tel à permettre de combler un espace entre les demi-circonférences des rouleaux constituant un creux risquant d'être perceptible aux roues d'un avion, lesdits rouleaux intermédiaires (231, 232) n'étant pas en contact avec les surfaces des rouleaux de support (221 à 223) qui les entourent, de manière à tourner librement sur leur axe quand ils sont entraînés pour la circulation de la bande (240) qu'ils supportent.

11. Procédé pour arrêter un véhicule lancé sur une voie, mis en oeuvre dans le système selon l'une quelconque des revendications précédentes, **caractérisé en ce qu'**il comprend une commande des moyens d'entraînement des bandes mobiles agencées à entraîner les bandes mobiles en sens inverse du sens de déplacement d'un véhicule à arrêter avec une vitesse variable au moins égale à la vitesse instantanée dudit véhicule, jusqu'à ce que la vitesse dudit véhicule par rapport à un référentiel fixe s'annule.

## Claims

1. System (1 to 9) for stopping a vehicle (23, 30, 64) launched on a track (25, 32, 63), comprising at least one movable band, formed by one or more conveyer belts (10-14; 21, 22, 32, 42; 31, 33, 34, 240), integrated in a portion of the said track (25, 32, 63), and means (100, 110, 120, 130, 140, 150; 220, 320, 420) for driving the said movable band (10 to 14; 21, 22, 32, 42; 31, 33, 34), **characterised in that** the driving is effected either in a direction opposite to the direction of movement of the vehicle (23, 30, 64) at a speed at least equal to that of the said vehicle (23, 30, 64) or its wheels, or in the same direction as the direction of the same vehicle but at a speed greater than the latter or that of its wheels.

2. System (2 to 8) according to Claim 1, **characterised in that** it comprises at least two sets of movable bands (21, 22, 32, 42; 31, 33, 34; 51 to 54; (60 to 62)) disposed parallel to the direction of movement of the vehicles.

3. System (7) according to one of Claims 1 or 2, **characterised in that** it comprises a set of movable bands disposed transversely with respect to the direction of movement of the vehicles.

4. System according to one of Claims 2 or 3, **characterised in that** each set of movable bands comprises, in the direction of movement of the vehicles, a number of movable bands at least equal to the maximum number of axles on the vehicles able to be stopped by this system.

5. System according to any one of the preceding claims,
**characterised in that** it is in the form of a removable system able to be installed on any track on land.

6. System (1) according to any one of the preceding claims, **characterised in that** the movable bands (10 to 14) are all driven at the same speed by common drive means (150).

7. System according to any one of the preceding claims, **characterised in that** each movable band (10) is provided with a running device (100) comprising a set of support rollers (15) and at least one drive drum (16) around which the movable band (10) is wound.

8. System according to Claim 7, **characterised in that** the support rollers (221 to 223) rest on a sliding bed (18, 210) disposed on a support plane (211) and formed by bearings, situated under the rollers or between them.

9. System according to Claim 8, **characterised in that** the sliding bed of bearings (18, 210) consists of balls, wheels, small rollers or rods resting on the surface of the deck (17, 211, 47) by means of corresponding housings able to hold them in place, without preventing them from turning freely on themselves.

10. System according to one of the preceding claims, **characterised in that**, between the support rollers (221 to 223), there is mounted another intermediate roller (231, 232) with a diameter such as to make it possible to fill in a space between the half-circumferences of the rollers constituting a hollow which might be perceptible to the wheels of an aircraft, the said intermediate rollers (231, 232) not being in contact with the surfaces of the support rollers (221 to 223) which surround them, so as to turn freely on their axis when they are driven for the circulation of the strip (240) which they support.

11. Method for stopping a vehicle launched on a track, implemented in the system according to any one of the preceding claims, **characterised in that** it comprises a control for the means driving the movable bands arranged to drive the movable bands in the opposite direction to the direction of movement of a vehicle to be stopped at a variable speed at least equal to the instantaneous speed of the said vehicle, until the speed of the said vehicle with respect to a fixed reference is cancelled out.

## Patentansprüche

1. System (1 bis 9) zum Anhalten eines Fahrzeugs (23, 30, 64), das auf einer Bahn (25, 32, 63) fährt, umfassend mindestens ein bewegliches Band, das aus einem oder mehreren Förderbändern (10-14; 21, 22, 32, 42; 31, 33, 34, 240) gebildet ist, die in einem Abschnitt dieser Bahn (25, 32, 63) eingebaut sind, und Mittel (100, 110, 120, 130, 140, 150; 220, 320, 420) zum Antreiben dieses beweglichen Bandes (10 bis 14, 21, 22, 32, 42; 31, 33, 34), **dadurch gekennzeichnet, dass** das Antreiben entweder in die der Fahrtrichtung des Fahrzeugs (23, 30, 64) entgegengesetzte Richtung mit einer Geschwindigkeit mindestens gleich jener des Fahrzeugs (23, 30, 64) oder seiner Räder oder in dieselbe Richtung wie die Fahrtrichtung des Fahrzeugs, aber mit einer höheren Geschwindigkeit als dieses oder jener seiner Räder erfolgt.

2. System (2 bis 8) nach Anspruch 1, **dadurch gekennzeichnet, dass** es mindestens zwei Einheiten aus beweglichen Bändern (21, 22, 32, 42; 31, 33, 34; 51 bis 54; 60 bis 62) umfasst, die parallel zur Fahrtrichtung der Fahrzeuge angeordnet sind.

3. System (7) nach einem der Ansprüche 1 oder 2, **dadurch gekennzeichnet, dass** es eine Einheit beweglicher Bänder umfasst, die quer zur Fahrtrichtung der Fahrzeuge angeordnet sind.

4. System nach einem der Ansprüche 2 oder 3, **dadurch gekennzeichnet, dass** jede Einheit aus beweglichen Bändern in Fahrtrichtung der Fahrzeuge eine Anzahl beweglicher Bänder umfasst, die zumindest gleich der maximalen Achszahl der Fahrzeuge, die durch dieses System angehalten werden können, ist.

5. System nach einem der vorhergehenden Ansprüche, **dadurch gekennzeichnet, dass** es in Form eines abnehmbaren Systems vorhanden ist, das auf jedem Landweg installiert werden kann.

6. System (1) nach einem der vorhergehenden Ansprüche, **dadurch gekennzeichnet, dass** die beweglichen Bänder (10 bis 14) alle mit derselben Geschwindigkeit durch gemeinsame Antriebsmittel (150) angetrieben werden.

7. System nach einem der vorhergehenden Ansprüche, **dadurch gekennzeichnet, dass** jedes bewegliche Band (10) mit einer Rollenvorrichtung (100) versehen ist, umfassend eine Stützrolleneinheit (15) und mindestens eine Antriebstrommel (16), um die das bewegliche Band (10) gewickelt ist.

8. System nach Anspruch 7, **dadurch gekennzeichnet, dass** die Stützrollen (221 bis 223) auf einem Gleitbett (18, 210) liegen, das auf einer Stützebene (211) angeordnet und aus Lagerrollen gebildet ist, die unter den Rollen oder zwischen ihnen vorgesehen sind.

9. System nach Anspruch 8, **dadurch gekennzeichnet, dass** das Lagerrollengleitbett (18, 210) aus Kugeln, Rollen, kleinen Rollen oder Stangen gebildet ist, die auf der Bogenbrücke (17, 211, 47) mit Hilfe entsprechender Lagerungen ruhen, die sie halten können, ohne sie daran zu hindern, sich frei um sich selbst zu drehen.

10. System nach einem der vorhergehenden Ansprüche, **dadurch gekennzeichnet, dass** zwischen den Stützrollen (221 bis 223) ein weitere Zwischenrolle (231, 232) mit einem solchen Durchmesser angeordnet ist, der es erlaubt ist, einen Raum zwischen den halben Umfängen der Rollen, die einen Hohlraum bilden, der für die Räder eines Flugzeugs gefährlich sein könnte, auszufüllen, wobei diese Zwischenrollen (231, 232) nicht mit den Flächen der Stützrollen (221 bis 223), die sie umgeben, in Kontakt sind, so dass sie sich frei um ihre Achse drehen, wenn sie durch den Umlauf des Bandes (240), das sie tragen, angetrieben werden.

11. Verfahren zum Anhalten eines Fahrzeugs, das auf einer Bahn fährt, zur Anwendung in dem System nach einem der vorhergehenden Ansprüche, **dadurch gekennzeichnet, dass** es eine Steuerung der Antriebsmittel der beweglichen Bänder umfasst, die derart angeordnet sind, dass sie die beweglichen Bänder in zur Fahrtrichtung des anzuhaltenden Fahrzeugs entgegengesetzte Richtung mit einer variablen Geschwindigkeit antreiben, die zumindest gleich der momentanen Geschwindigkeit des Fahrzeugs ist, bis die Geschwindigkeit des Fahrzeugs, bezogen auf einen festen Bezugswert, auf Null reduziert ist.
